# EUROPEAN PATENT APPLICATION

(11) **EP 3 989 202 A1**
(43) Date of publication of application: **27.04.2022**
(21) Application number: 20202706.6
(22) Date of filing: 20.10.2020
(51) Int. Cl.: G08G 1/16, A61B 5/16, B60Q 9/00, B60W 30/00, B60W 40/08, B60W 50/14, G01S 13/931, G06K 9/00

(54) **METHOD FOR NOTIFYING HAZARDS TO A DRIVER OF A MOTOR VEHICLE AND DEVICE FOR IMPLEMENTING THE SAME**

(71) Applicant: Aptiv Technologies Limited, St. Michael (BB)
(72) Inventor: PAUS, André, 42111 Wuppertal (DE)
(74) Representative: Vigand, Philippe

(57) **Abstract**

A method for notifying hazards (30) to a driver (1) of a motor vehicle (20), comprising:
- monitoring a spatial environment surrounding the vehicle (20),
- monitoring a driver's attention within the vehicle (20), and
- detecting at least a first direction (D1) from which at least one hazard (30), on relative approach to said motor vehicle (20), is to be noticed by the driver (1), characterized in that it further comprises :
- detecting at least a second direction (D2) to which the driver (1) is having attention, and
- generating an alert when the second direction (D2) is different from the first direction (D1).

## Description

### TECHNICAL FIELD

The present disclosure relates to the field of driving assistance, especially assistance for warning the driver of a motor vehicle of potential hazards to prevent accidents with road users or objects of road environment. More specifically, the present disclosure relates to a method for notifying hazards to a driver and to a device for implementing the same.

### BACKGROUND

In recent years, a range of driver assistance functionalities have been developed to improve traffic safety. Many of them make use of acoustic signaling to draw the drivers attention to potential hazards.

Acoustic feedback can be provided by many driving assistance system such ultrasonic sensors for measuring the distance to the next obstacle. Driving assistance systems include object detection algorithms based on responses provided e.g. by cameras, LiDAR or RADAR sensors, to detect objects on the pathway of the host vehicle and to issue at least an alarming sound in case of imminent collision. Driving assistance systems also include system to alert the driver when the vehicle drifts from its trajectory or when it is detected that the driver has signs of tiredness, such as abnormal blink rates or degrees of eye-openness for example. Some of these assistance systems are known as Lane Change Assistance System, Lane Departure Warning System (LDWS), Autonomous Emergency Breaking (AEB), Active Brake Assist (ABA) or Acoustic Parking System (APS).

Document EP3154811A1 discloses a detection system that interacts with the driver using a virtual sound source to make the driver aware of his or her lack of vigilance. To this end, this system has a monitoring unit able to evaluate whether the driver vigilance is higher than a predefined threshold. Such an evaluation is based on physiological sensors (e.g. heartbeat rate of the driver), on postural monitoring of the driver, on driving style measures (regularity of the trajectory or its appropriateness with the roadway alignment), or on the frequency with which the driver controls elements of the dashboard. Therefore, this system is configured to draw the driver's attention when his or her vigilance falls down or slackens. The sound source generates stereophonic sounds of varying amplitude that create the illusion for the driver of a virtual sound source moving relative to the driver. Several kind of sounds can be used to identify a danger while producing a virtual soundscape in real time inside the vehicle.

Document EP3261076A1 suggests an approaching-body warning device that warns the driver about the presence of an approaching object with respect to the vehicle. The system comprises an audio control unit that controls the volume of the surround stereo audio system of the vehicle so that a warning sound is audible for the driver in a direction which corresponds to the direction in which the object is approaching the vehicle.

Document WO2012143578 relates to a system which allows the driver of a vehicle to perceive external sound signals emitted in the vicinity of his or her vehicle and usually received in an attenuated form inside the vehicle. Such a sound signal may typically be the sound emitted by a klaxon, the siren of a priority vehicle, a sound warning issued by another vehicle which is reversing or a warning exclaimed by a pedestrian.

Many drivers are annoyed by the collection of diverse acoustic and visual signaling. These signals are adding up to other acoustic signals, e.g. beeping sounds signal that a passenger has not closed his safety belt, that a door is opened, that vehicle headlights are switched on while the motor has been stopped, that the vehicle needs a checkup. Because of this large number of acoustic signals drawing the conscious attention of the driver, passengers are bothered and the risk is increased that these signals are ignored or switched off by the user.

On the other hand, a number of relevant aspects for a driver can be detected by the vehicle sensors. The presence of vehicles and pedestrians nearby, road boundaries, traffic lights, reduced speed limits, etc. However, notifying all the relevant aspects in a conventional way would overwhelm the driver. In other words, it would be illusory to seek for restituting all possible warning notifications in order to make the driving safer, because increasing the safety cannot be exploited at the expense of the user's comfort.

Accordingly, there is a need for improving existing driving assistance solutions in order to at least partially overcome the aforementioned issues and drawbacks, in particular to improve safety on board the vehicle without impairing the well-being of vehicle's users.

### SUMMARY OF THE SOLUTION

To address this concern, the present disclosure suggests, as a first aspect, a method for notifying hazards to a driver of a motor vehicle. This method comprising :
- monitoring a spatial environment surrounding the vehicle,
- monitoring a driver's attention within the vehicle, and
- detecting at least a first direction from which at least one hazard, on relative approach to said vehicle, is to be noticed by the driver,
wherein said method further comprising :
- detecting at least a second direction to which the driver is having attention, and
- generating an alert when the second direction is different from the first direction.

Thanks to the above solution, the driver attention locations and the hazards locations are matched against each other so that it becomes possible to understand which of the hazards the driver is aware or unaware of. Advantageously, an alert may be triggered only if the driver is unaware of an hazard. Indeed, if the driver is aware of the hazard, there is no real need to further notify him or her. As a result, the number of alerts can be significantly reduced, thus increasing the comfort and the well-being of the people on board through a pleasant and low stress atmosphere inside the vehicle.

According to one embodiment said alert is generated when, within a time interval from the detection of the first direction, the second direction remains different from the first direction. Such an embodiment further allows to optimize the alert generation by giving the driver a certain reaction time to become aware of the danger which has been detected by the automatic monitoring of the spatial environment surrounding the vehicle.

Preferably, the second direction is provided by the direction of a driver's gaze and/or driver's head.

In one embodiment, the second direction is provided by at least one of a direction pointing through a windscreen of the vehicle, a direction pointing to an internal or external rearview mirror of the vehicle, and a direction pointing to a left or right shoulder of the driver.

In a preferred embodiment, the time interval depends on a relative speed of the hazard with respect to the vehicle and/or on a distance between the vehicle and the hazard.

According to one embodiment, the alert generates an augmented reality providing, in real time, at least complementary virtual sound effects.

Preferably, said complementary virtual sound effects provide a realistic sound environment inside the vehicle.

In one embodiment, at least one of said sound effects is based on an acoustic signal that allow an intuitive identification of a type of said hazard.

In another embodiment, at least one of said sound effects is diffuse or subliminal if said hazard is not imminent, so as to maintain a low stress environment inside the vehicle.

Preferably, at least one of said sound effects is such that the closer the hazard is to the vehicle, the more perceptible said sound effect is.

According to another embodiment, at least one of said sound effects is user-configurable.

Preferably, at least one of said sound effects, has an intensity that depends on a noise level inside the vehicle.

In a further embodiment, said hazard is constituted by a user or object of a road or road environment.

According to a second aspect, the present disclosure also relates to a device for the implementation of the method according to any of the embodiments or variants disclosed in this disclosure or to any possible combination of these embodiments. To this end, said device has :
- a vehicle spatial environment monitoring unit configured to detect at least a first direction from which a hazard on relative approach to a vehicle is to be noticed by a driver of said vehicle,
- a driver behavioural monitoring unit for detecting a driver's attention,
- an alert generator for issuing an alert in case of a risk of collision between the vehicle and said hazard,
wherein :
- the driver behavioural monitoring unit is configured to detect at least a second direction to which the driver is having attention, and
- the alert generator is configured to issue said alert when the second direction is different from the first direction.

Other embodiments and advantages will be disclosed hereafter in the detailed description.

### BRIEF DESCRIPTION OF THE DRAWINGS

The solution and the embodiments suggested in the present disclosure should be taken as non-limitative examples and will be better understood with reference to the attached Figures in which :
Fig. 1 is schematic representation of a scene in a road environment showing a vehicle and a potential hazard according to a top or plan view,
Figs. 2 depicts a flow chart of the method according to several embodiments, and
Fig. 3 is a schematic view of an example of a device for implementing the method according to at least one of its embodiments.

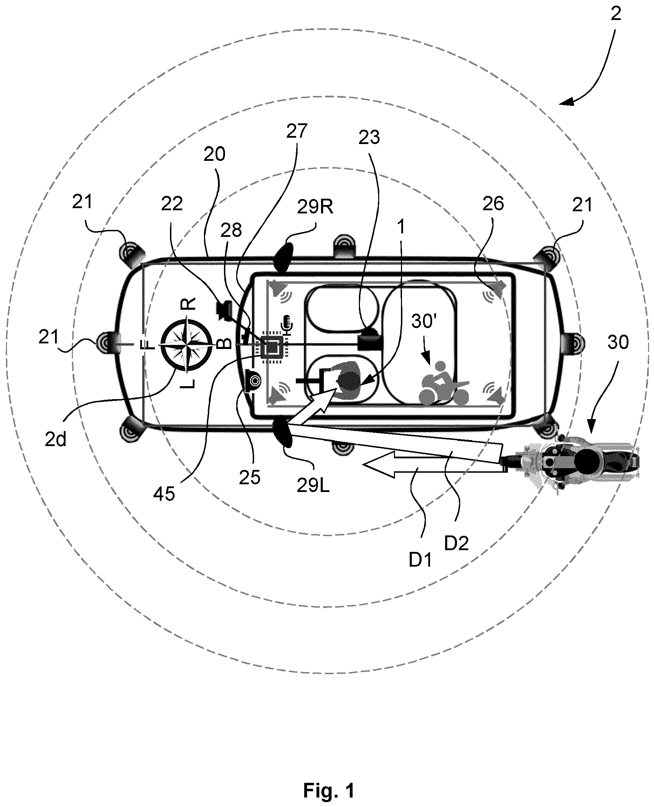

Referring to Fig. 1, the latter schematically shows an example of a local road environment in which the method of the present solution could typically be deployed. The road scene represented in Fig. 1 shows a motor vehicle 20 together with a motorcycle. The method is designed to be implemented within the vehicle which could be a car or any other motor vehicle. The motorcycle can be regarded as a hazard 30 (or a source of hazard) for the motor vehicle 20, in particular for the driver 1 as well as for any other user of the vehicle if any. Of course, such an hazard is not limited to a motorcycle but can be derived from any road user or any object located on the road or surroundings the road.

For instance, a hazard could be materialized by another car, a tramway, a pedestrian, an animal, a road safety fence, a tree or any other object or person that may be regarded as a potential obstacle. In addition, it should be noted that such an object or person should be regarded as being a hazard 30 if it represents an imminent danger to the vehicle 20. Several parameters may be taken into account in order to consider that there is an imminent danger. For example, the speed of the object or the vehicle 20, the distance between the object or the person and the vehicle 20, the relative position (typically side positions) of the object or person with respect to the vehicle 20, an overtaking maneuver undertaken by another vehicle relative to the vehicle 20 or the activation of a lane change indication (e.g. a direction light) by the driver 1 of the vehicle 20 in the presence of another close vehicle already located on the lane that the driver 1 intends to reach. Generally speaking, a traffic participant may be regarded as a hazard if an unawareness of the driver 1 of that participant is likely to lead to an accident given the current driver's actions.

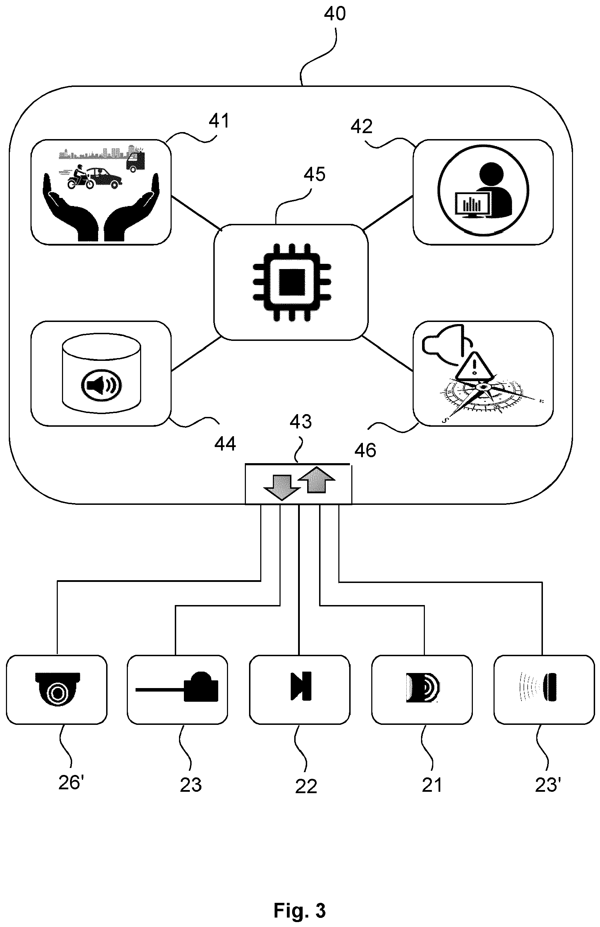

The spatial environment 2 surrounding the vehicle 20 is schematically depicted by concentric circles in Fig. 1. This spatial environment is monitored, preferably continuously or permanently, by at least one suitable device on board the motor vehicle 20. Such a device is referred as to a vehicle spatial environment monitoring unit 41 and is schematically depicted in Fig. 3.

The vehicle spatial environment monitoring unit 41 is designed to detect any hazard in the vicinity of the motor vehicle 20, i.e. a single hazard or a plurality of hazards located in the proximity of the vehicle. To this end, it has several environmental sensors, or is at least able to receive signals provided by such sensors, in order to process information issued or derived by the latter. Such environmental sensors may typically be external sensors such as ultrasonic sensors 21, external camera 22, LiDAR 23 (acronym for *Laser imaging Detection And Ranging*) or any other sensor suitable for sensing and/or detecting an obstacle located in the proximity of the motor vehicle 20. These environmental sensors may typically be controlled by a central processing unit 45.

Although concentric circles has been shown to depict the spatial environment 2 around the motor vehicle 20, it should be understood that shape and extend of the area that constitutes this environment 2 mainly depends on the type of sensors used to monitor the vicinity of the motor vehicle. This area also depends on the number or sensors used, their locations on the motor vehicle, their pointing direction, their performances as well as the urban or topographical configuration around the motor vehicle 20. The range of this area or zone may be greater if the vehicle is in an open area than in an urban environment.

The motor vehicle 20 is further provided with a driver behavioural monitoring unit 42 (shown in Fig. 3) in order to at least detect or monitor the driver's attention. The driver behavioural monitor unit 42 may include or be connected to one or several behavioural sensors, such as the internal camera 25 shown in Fig. 1. In addition, in order to provide a feedback inside the vehicle when at least one obstacle or potential hazard has been detected by at least one of the environmental sensors of the vehicle spatial environment monitoring unit 41, the motor vehicle is further provided with an alert generator 46 (shown in Fig. 3) which may include or be connected to at least one suitable notifying entity for notifying the driver 1. In Fig. 1, such a notifying entity is represented by the speakers 26 of an in-vehicle audio system. In the present example, this audio system has four speakers 26 which are preferably arranged at the four corners of the passenger compartment (cabin) of the motor vehicle. These speakers 26 may typically be part of an in-car entertainment.

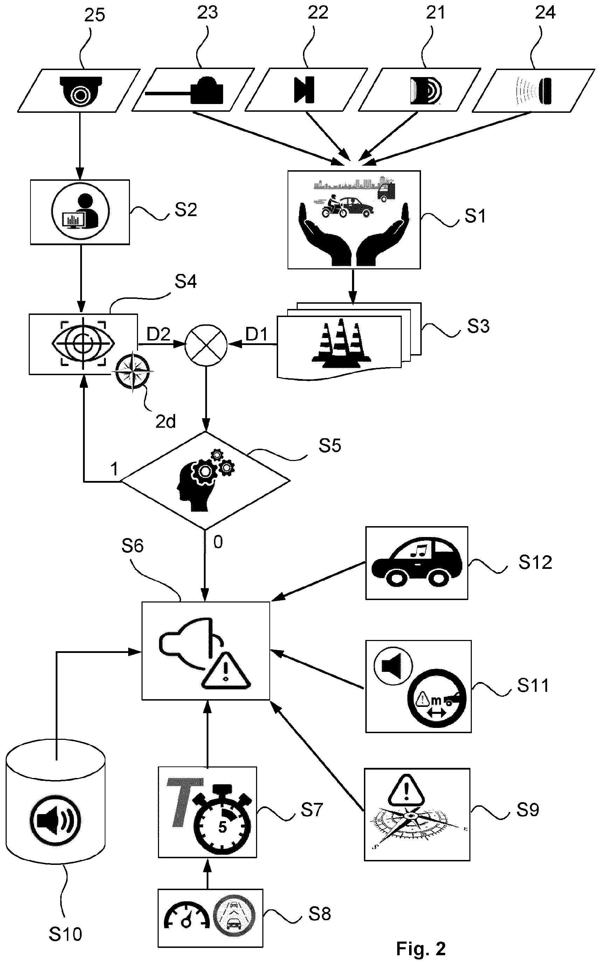

Referring to Fig. 2, several embodiments of the method suggested through the present solution will be presented. This figure depicts a flow chart with several steps and sensors shown by using pictograms. The steps are numbered from S1 to S12. However, it should be kept in mind that there is no requirement to consider these steps in that order if different orders could clearly be applicable. In addition, since some of these steps are optional, there is no requirement to consider all of them in the present method. Since this method may be designed to be implemented in a vehicle, such as the motor vehicle 20 shown in Fig. 1, reference will also be made to Figs. 1 and 3.

The method is substantially used for notifying hazards 30, or at least one hazard 30, to the driver 1 of the motor vehicle 20. To this end, the method has a step S1 for monitoring the spatial environment 2 surrounding the vehicle 20. This step could be performed using at least one environmental sensors, preferably several of them among a LiDAR 23, a external camera 22, ultrasonic sensors 21 and any other kind of sensor such as RADAR 24 for instance. Thanks to the signals and or responses provided by the aforementioned environmental sensor(s), the spatial environment 2 located in the vicinity of the motor vehicle 20 can be detected and/or monitored, especially to determine whether there is at least one obstacle or hazard 30 approaching the vehicle 20. Accordingly, step S1 can also be regarded as a step for monitoring the spatial situation of objects in the vicinity of the vehicle, namely the spatial environment of the vehicle.

The method further comprises a step S2 for monitoring the driver's attention within the vehicle. To this end, at least one internal camera 25 could be used as behavioural sensor for monitoring the attention of the driver 1. Other kinds of behavioural sensors could be used if any. Preferably, the internal camera 25 is located in front of the driver 1, so that the driver's face can be advantageously located at any time in the field of view of the internal camera 25.

From the foregoing, one can note that the monitoring is performed both outside the vehicle, using the environmental sensor(s) 21, 22, 23, 24, and inside the vehicle, using the behavioural sensor(s) 25. Preferably, these outside and inside monitoring are carried out on a continuous basis in order to know what is going on around and inside the vehicle in real time.

Deriving from step S1, a first detection step S3 is performed. This step S3 aims to detect at least a first direction D1 (Fig. 1) from which a hazard 30, on relative approach to the motor vehicle 20 (or to the driver 1), is to be noticed by the driver 1. The first direction D1 is typically detected, e.g. using a dedicated algorithm, during the step S1 aiming to monitor the spatial environment surrounding the vehicle. For example, and according to the road scene shown in Fig. 1, the hazard 30 (motorcycle) is approaching the vehicle from the back (i.e. rear), more specifically from the back left side of the motor vehicle 20.

On the other hand, deriving from step S2 a second detection step S4 is performed. This step S4 aims to detect a second direction D2 (Fig. 1) to which the driver 1 is having attention, e.g. using a dedicated algorithm. The second direction D2 is typically detected when monitoring driver's attention. For example, the driver 1 could direct his or her attention forward, looking the road ahead through the windscreen 27. Alternatively, the driver 1 may direct his or her attention backward, looking the road behind him or her through one of the rearview mirrors such as the internal rearview mirror 28 (central mirror), the left side rearview mirror 29L (external mirror) or the right side rearview mirror 29R (external mirror).

At step S6, an alert is generated when the second direction D2 is different from the first direction D1. According to the road scene shown in Fig. 1, the driver's attention is drawn to the back (rear) of the vehicle, more specifically to back (or rear) left side of the motor vehicle 20. Therefore, the second direction D2 to which the driver 1 directs his or her attention does not differ, or does not substantially differ, from the first direction D1 from which the hazard 30 approaches the motor vehicle 20. Consequently, since the second direction D2 matches (or substantially matches) with the first direction D1, it means that the driver 1 is aware of the hazard 30, so that it is not necessary to initiate or trigger an alert to notify or warn the driver. As a result, if the driver 1 is a carful person, numerous notifications such as sound alerts can be avoid due to the good behavior of the driver.

In particular, the present solution allows to significantly reduce the number of acoustic signals, thus avoiding the vehicle's users from being bothered. Consequently, the safety is improved since the risk of ignoring an alert or switching off some sensors is also reduced.

To achieve step S6, namely generating or triggering an alert when the second direction D2 is different from the first direction D1, it is typically suitable to perform an analyzing step S5 for comparing the directions D1 and D2 with each other, e.g. to know if the first direction D1 is equal or substantially equal to the second direction D2. This step S5 is symbolized by a diamond which represents a decision making step and which may be regarded as consisting to know if the driver 1 is aware of the presence of at least one hazard 30 surrounding the motor vehicle 20. If the answer is "Yes" (represented by the Boolean number "1" in the flow chart of Fig. 2), the process may e.g. merely continue to monitor both the spatial environment surrounding the vehicle and the driver's attention within the vehicle. However, if the answer is "No" (Boolean number "0"), there is a need to notify the driver 1 since there is a good chance that he or she is not conscious of the currently hazard(s) 30 detected during the monitoring carried out at step S1.

The comparison between the directions D1 and D2 may be performed with a relative high precision since the gaze estimation algorithms for determining the first direction D1 and the second direction D2 are typically able to differentiate directions in a range between 1° to 5°. Such a precision may be helpful for example when a hazard 30 (such as a fast vehicle) on a fast lane of highway is approaching the motor vehicle 20 with a great velocity difference. In this case, a distinction should be made between a gaze (second direction D2) into the rear mirror toward a following car in the same lane and a gaze towards the overtaking car (hazard 30).

Anyway, it should be noted that monitoring the driver's attention, in the present solution, using behavior sensor(s) 25 is not primarily intended to detect whether the driver is falling asleep or has signs of drowsiness. Indeed, the primary goal of this monitoring step S2 is to check whether the driver is aware of potential hazards 30 that are currently located within the spatial environment 2 of the motor vehicle 20.

According to one embodiment, the alert is generated when, within a time interval T from the detection of the first direction D1, the second direction D2 is or remains different from the first direction D1. Such an additional feature is schematically depicted at step S7 in Fig. 2. Such a time interval provides the driver 1 with a certain amount of time to become aware of a hazard 30. Preferably and as mentioned above, this time interval T starts from the instant where the hazard 30 is detected, namely during the monitoring of step S1. Still preferably, this time interval may ends as soon as a predetermined duration is lapsed. Accordingly, the time interval T may be set in advance.

Furthermore, the time interval T may be constant or variable depending on certain scenarios. For example, the time interval T may depends on :
- a relative speed of the hazard 30 with respect to the motor vehicle 20 and/or
- a distance between the motor vehicle 20 and the hazard 30.
Such an embodiment is schematically depicted at step S8 in Fig. 2.

According to a preferred embodiment, the second direction D2 is provided by the direction of the driver's gaze and/or the driver's head. To this end, the behavior sensor 25 may be able to detect where the driver 1 is looking and/or where the driver's head is oriented. The orientation of the head of the driver 1 could be defined e.g. with respect to a reference axis which could be the longitudinal axis of the motor vehicle. Such an orientation could be further defined with respect to an horizontal plane, especially if the internal rearview mirror 28 is positioned fairly high and close to the driver's head with respect an horizontal line seen by the driver when sitting in a normal posture. Preferably, the driver's gaze is taken into account for determining the second direction D2, because the gaze direction provides a sharp information about the direction or the area the driver 1 is looking at. Accordingly, the internal camera 25 pointing to the head or to the face of the driver 1 may be configured to detect the pupil or iris of the driver's eyes, knowing that the gaze could be defined as being the direction in which the driver's eyes are pointed.

In such a context, it should be noted that there is no need to determine a very precise direction because the danger areas surrounding the motor vehicle 20 can advantageously be limited in number. Typically, the hazard 30 may be localized:
- in front of the motor vehicle, i.e. within an area that may be seen by the driver through the windscreen 27, more specifically at a substantially horizontal level in relation to the common posture of the driver's head looking forward,
- behind the motor vehicle, i.e. within an area that may be seen by the driver through at least one of the rearview mirror 28, 29L, 29R, or
- on one side of the motor vehicle, i.e. within an area that may be seen by the driver in a direction substantially perpendicular to the longitudinal axis of the vehicle or in an area that may be seen by the driver above one of his or her shoulders, namely above his or her right or left shoulder e.g. in order to cover the blind spots of the vehicle.

Accordingly, all the key areas surrounding the motor vehicle may be defined by a few directions, such as directions F, B, R and L which are schematically shown in Fig. 1 using the wind rose or compass rose on the hood of the vehicle 20. Intermediate areas or sectors could be further defined e.g. by directions F-R (similar to northeast direction) or B-L (similar to southwest direction).

Therefore, in one embodiment, the second direction D2 is provided by at least one of :
- a direction (F) pointing through the windscreen 27 of the vehicle 20,
- a direction (B) pointing to the internal rearview mirror 28 or to one of the external rearview mirror 29L, 29R of the vehicle, and
- a direction (L, R) pointing to a left or right shoulder of the driver 1.

The last direction (L, R) of the above list may further include a direction pointing substantially perpendicularly to the longitudinal axis of the vehicle 20, namely a direction pointing to the left or right front door window of the vehicle 20. Alternatively, the direction pointing to the left or right front door window of the vehicle may be regarded as a fourth option in the above-list. In such a case, the directions pointing to the left shoulder or right shoulder of the driver may be referred to as directions B-L, B-R, respectively, and the direction pointing through left or right front door window would be referred to as directions L and R, respectively.

Since the above-listed directions are easy to determine for an interior camera 25 running with a suitable software, the computations undertaken at steps S4, S5 and S6 do not require significant computing resources. Therefore, the response times of the hardware components in charge of these steps are very short and well appropriate for real time conditions. Still advantageously, the development of such an embodiment remains simple and cost effective to implement.

According to a preferred embodiment, the alert generated at step S6 is an acoustic notification, such as a sound alert. Nevertheless, the alert generated at step S6 could be a visual notification or both an acoustic and visual notification.

Preferably, the alert initiated at step S6 generates an augmented reality providing, in real time, at least complementary virtual sound effects or at least one complementary virtual sound effect. In other words, the alert may constitute an augmented reality focused on sounds audio feedback. Accordingly, an augmented sound reality can be obtained by superimposing complementary sound elements or effects on the visual and sound reality. Instead of or in addition to complementary sound elements or effects, visual information or effects could be used. According to another embodiment, the aforementioned sound element or effects may be superimposed to an augmented reality that is provided on a continuous basis to the driver, i.e. inside the vehicle.

Still preferably, the complementary virtual sound effects provide a realistic sound environment or atmosphere inside the vehicle 20. Therefore, the alert may constitutes an audio augmented reality providing, in real time inside the vehicle, a realistic sound environment of the vehicle 20 on the basis of complementary virtual sound effects.

More specifically, according to one embodiment at least one of these sound effects is based on an acoustic signal that is spatially and temporally coherent with the hazard 30 detected at step S1. Therefore, the position of a virtual sound source 30' can be reproduced so as to reflect the real world direction relative to the vehicle 20, preferably relative to the driver 1 of the motor vehicle 20. This can be achieved using the in-car audio system, especially the four speakers 26 of this audio system. Indeed, using appropriate audio software it is possible to place a virtual sound source in any direction relative to the driver. Accordingly, the in-car audio system can be advantageously used to create a soundscape. In the example shown in Fig. 1, the virtual sound source 30' aims to reflect at least the spatial position, relative to the interior of the vehicle, of the motorcycle which has been detected as a hazard 30 during step S1. Accordingly, one can note that the position of the virtual sound source 30' matches with the position of the hazard 30, i.e. the motorcycle which is the related true object. Such an embodiment is schematically depicted at step S9 in Fig. 2.

According to another embodiment, at least one of the sound effects is based on an acoustic signal that allow an intuitive identification of the type or kind of hazard 30. This intuitive identification may be regarded as a natural identification or an immediate identification, namely an identification resulting from immediate recognition for common humans having a driving experience. To this end, a sound library, as that shown at step S10 in Fig. 2, may be used to inventory a plurality of pre-recorded sound types. In the example shown in Fig. 1, one of them would be a motorcycle sound, so that the driver can immediately recognize that the nature of the related hazard 30. In other words, in this example, the driver can immediately understand that the hazard is a motorcycle thanks to the type of sound diffused by the speakers 26. Thus, at least one of the sound effects is based on an acoustic signal that is coherent with the type of hazard. The sound library may store numerous sound types such as sounds referring to cars, trucks, trolley cars, trams, buses, motorbikes, scooters, pedestrians, bicycles, electrical scooters, riders, etc.

In one embodiment, at least one of the sound effects is diffuse or subliminal if the related hazard 30 is not imminent (or immediate). A hazard may be determined as being not imminent based on its distance with the vehicle 20 and/or its relative speed with respect to the vehicle 20. Providing a diffuse or subliminal sound effects if the hazard is not imminent helps to keep a low stress environment (or atmosphere) inside the vehicle. Thus, the sounds may create a subconscious awareness of the environment similar the real world traffic noises.

Only if immediate danger is detected, the aggressiveness of the sound is increased to make the driver 1 conscious of the potential hazard. Thus, the sound may not only depend on the driver's consciousness or unconsciousness in presence of a hazard, but it may further be optimized with respect to the importance and urgency of the subjects and objects in the environment of the motor vehicle 20. Therefore, in one embodiment illustrated through the step S11 of Fig. 2, at least one of the sound effects is such that the closer the hazard 30 is to the vehicle 20, the more perceptible this sound effect is. Perception of the sound effect can be increased by raising the amplitude of the acoustic vibrations and/or by raising the frequency of the vibrations. Indeed, medium and high frequencies will be better perceived than low frequencies for the same intensity.

In one embodiment, at least one of the sound effects is user-configurable. Depending on the vehicle owner or driver preferences, a soundscape could, for example, be chosen or selected among a set of thematic soundscapes such as modern, classic, science fiction oriented, natural or vintage soundscapes. Thanks to such a feature, the soundscapes could be customized by the driver, thus further helping to create a pleasant and relaxed driving atmosphere for the driver.

According to another embodiment, the hazard warning or notification takes into account the noise level inside the motor vehicle 20. Noise in the passenger compartment of the vehicle may comes from the engine, volume of the entertainment system, passenger voices or other noise sources. As schematically depicted in Fig. 2 through the pictogram of step S12, at least one of the sound effects may have its intensity that depends on the noise level inside the motor vehicle 20.

The hazard 30 is typically constituted by an actor or user of the road, as suggested through the different sound types that may be stored in the sound library shown at step S10. However, a hazard 30 may also be constituted by an object of a road or road environment. In other words, the hazard 30 may have as a source a user or object of the road or road environment, so that the hazard may come from such a user or object. For example, a road safety fence, bollards or road posts, traffic cones or road infrastructures such as traffic lights may be part of objects of the road or road environment that may be regarded as hazards. By making use of head or eye tracking, as suggested during the driver behavioural monitoring of step S2 or S4, the driver 1 can be acoustically informed of such a road infrastructure. For example, the colours of the traffic lights, such as red light, orange light and/or even green light, could be reflected or reported by corresponding sounds, if the driver has not drawn his or her attention on these lights. Accordingly, if the driver fails to see e.g. a read light while the motor vehicle 20 is dangerously approaching the traffic light, an appropriate sound may notify the driver from the hazard constituted by the red traffic light. According to another scenario, the green traffic light may also be regarded as a potential hazard as soon as it appear after the red light. Indeed, if the driver fails to leave the traffic light when it turns green, there is a risk that road users, such as bicycles, scooters or motorcycles, overpass the motor vehicle 20 from its wrong side if the latter stay too long after the traffic light become green.

Thanks to the present solution, the attention can be drawn to potential hazards that are not in the driver viewing direction and that the driver might not be aware of. According to some embodiments, common abrupt alarming notifications, that tend to annoy the driver until they are switched off, can be advantageously replaced or minimized by coherent soundscapes allowing to efficiently notify any hazard via : (i) the type of sound for defining the nature of the hazard, (ii) the relative approaching direction thanks to the simulated origin of the virtual sound source 30', (iii) as well as the distance and urgency via the acoustic perception level of the sound effect. The present solution also increase safety because using acoustic alert when the hazard has not been seen by the driver, either due to driver's inattention or due to it location which may be outside the driver's field of view (e.g. in a blind spot), allows to efficiently inform the driver while he or she continues to look ahead for example. Once it has been detected through step S1 that the driver is aware of the hazard, the alert may be silenced or its intensity may be reduced.

In a second aspect, the present solution relates to a device 40 for the implementation of the above-disclosed method according to any of its embodiments or any combination of at least two embodiments. As better shown in Fig. 3, this device is at least designed for notifying hazards 30 to a driver 1 of a motor vehicle 20. To this end this device 40 has :
- a vehicle spatial environment monitoring unit 41 to detect at least a first direction D1 from which a hazard 30 on relative approach to the motor vehicle 20 (or to the driver 1 of this vehicle) is to be noticed by the driver 1,
- a driver behavioural monitoring unit 42 for detecting at least the driver's attention, and
- an alert generator 46 for issuing an alert in case of a risk of collision between the motor vehicle 20 and the aforementioned hazard 30.

According to the present solution, the driver behavioural monitoring unit 42 is configured to detect at least a second direction D2 to which the driver 1 is having attention, and the alert generator 46 is configured to issue the aforementioned alert when the second direction D2 is different from the first direction D1.

It should be noted that detecting the driver's attention means determining where the driver's attention is drawn. In the present case, it may also mean to determine in which area, around the motor vehicle 20, the driver's attention is focused or has been recently focused, even during a quick moment (e.g. with a furtive glance over his or her shoulder). The aforementioned area can be one area among a limited number of area around the vehicle 20 or around the driver 1 of this vehicle. Typically, theses areas could be referred to as being a front area (F), a back area (B) a left-side area (L), a right-side area (R). As mentioned in connection with the related method, intermediate areas may be added such as a front-left area (F-L), a front-right area (F-R), a left back area (B-L) and a right back area (B-R). Further area subdivisions may be applicable if needed, e.g. in order to identify a more specific sector or area.

As shown in Fig. 3, the device 40 may comprise several entities controlled by a central processing unit 45. This central processing unit 45 may be part of the device 40, as shown in Fig. 3, or may be located outside this device, e.g. in a general electronic control unit (ECU) of the motor vehicle 20. The device 40 may further comprise a communication interface 43 to exchange signals with any external device, unit or entity such as the central processing unit 45 and/or any environmental or behavioural sensor disclosed in connection with the related method. In addition, the communication interface 43 may be also used to connect the device 40, in particular the alert generator 46, to the sound system of the motor vehicle 20, namely to the speakers 26 arranged inside the passenger compartment. Alternatively, the device 40, especially the alert generator 46, may be connected to the ECU of the motor vehicle 20 and the ECU may be connected at its turn to the in-car audio system, namely to the speakers 26.

In the embodiment shown in Fig. 3, the device 40 has a sound library 44 that may be used to perform step S10 of the aforementioned method. In another embodiment, such a sound library may be a remote entity connected to the device 40 e.g. via the communication interface 43. It should be noted that the communication interface could exchange data, signals or information with any external entity by using a wire or wireless communication.

The analyzing step S5 aiming to compare the directions D1 and D2 in order to determine if they can be considered as equal or different, may be performed by a dedicated unit, such as a comparison unit, or by the central processing unit 45. The same may be applied to the other steps, in particular to the steps S7 to S12.

For all purposes, it should be understood that sound effects may be referred to as sounds and that hazards may be referred to as dangers. Also, although an overview of the inventive subject matter has been described with reference to specific example embodiments, various modifications and changes may be made to these embodiments without departing from the broader spirit and scope of embodiments of the solution disclosed in the present description.

## Claims

1. A method for notifying hazards (30) to a driver (1) of a motor vehicle (20), comprising :
- monitoring a spatial environment surrounding the vehicle (20),
- monitoring a driver's attention within the vehicle (20), and
- detecting at least a first direction (D1) from which at least one hazard (30), on relative approach to said vehicle (20), is to be noticed by the driver (1), **characterized in that** it further comprises :
- detecting at least a second direction (D2) to which the driver (1) is having attention, and
- generating an alert when the second direction (D2) is different from the first direction (D1).

2. The method of claim 1, wherein said alert is generated when, within a time interval (T) from the detection of the first direction (D1), the second direction (D2) remains different from the first direction (D1).

3. The method of claim 1 or 2, wherein the second direction (D2) is provided by the direction of driver's gaze and/or driver's head.

4. The method of any of claims 1 to 3, wherein the second direction is provided by at least one of a direction pointing through a windscreen (27) of the vehicle (20), a direction pointing to an internal rearview mirror (28) or external rearview mirror (29L, 29R) of the vehicle (20), and a direction pointing to a left or right shoulder of the driver (1).

5. The method of any of claims 2 to 4, wherein the time interval (T) depends on a relative speed of the hazard (30) with respect to the vehicle and/or on a distance between the vehicle (20) and the hazard (30).

6. The method of any of claims 1 to 5, wherein the alert generates an augmented reality providing, in real time, at least complementary virtual sound effects.

7. The method of claim 6, wherein said complementary virtual sound effects provide a realistic sound environment inside the vehicle (20).

8. The method of claim 6 or 7, wherein at least one of said sound effects is based on an acoustic signal that is spatially and temporally coherent with the hazard (30).

9. The method of any of claims 6 to 8, wherein at least one of said sound effects is based on an acoustic signal that allow an intuitive identification of a type of said hazard (30).

10. The method of any of claims 6 to 9, wherein at least one of said sound effects is diffuse or subliminal if said hazard (30) is not imminent, so as to maintain a low stress environment inside the vehicle (20).

11. The method of any of claims 6 to 10, wherein at least one of the sound effects is such that the closer the hazard (30) is to the vehicle (20), the more perceptible said sound effect is.

12. The method of any of claims 6 to 11, wherein at least one of said sound effects is user-configurable.

13. The method of any of claims 6 to 12, wherein at least one of said sound effects has an intensity that depends on a noise level inside the vehicle (20).

14. The method of any of claims 1 to 13, wherein said hazard (30) is constituted by a user or object of a road or road environment.

15. A device for implementing the method according to any of claims 1 to 14, comprising :
- a vehicle spatial environment monitoring unit (41) configured to detect a first direction (D1) from which a hazard (30) on relative approach to a vehicle (20) is to be noticed by a driver (1) of said vehicle (20),
- a driver behavioural monitoring unit (42) for detecting a driver's attention,
- an alert generator for issuing an alert in case of a risk of collision between the vehicle (20) and said hazard (30),
wherein :
the driver behavioural monitoring unit (42) being configured to detect at least a second direction (D2) to which the driver (1) is having attention, and
the alert generator being configured to issue said alert when the second direction (D2) is different from the first direction (D1).
